# FASCICULE DE BREVET EUROPEEN

(11) **EP 3 807 089 B1**
(45) Date de publication et mention de la délivrance du brevet: **14.02.2024**
(21) Numéro de dépôt: 19729573.6
(22) Date de dépôt: 14.06.2019
(51) Int. Cl.: B29C 64/153, B33Y 10/00, B33Y 80/00, B22F 10/47, B29C 64/386, B33Y 50/00, B22F 10/28, B22F 10/38, B29C 64/40

(54) **PROCEDE DE REALISATION D'UNE PIECE AVEC CAVITE PAR FABRICATION ADDITIVE**
ADDITIVES FERTIGUNGSVERFAHREN ZUR HERSTELLUNG EINES TEILES MIT EINEM HOHLRAUM
ADDITIVE MANUFACTURING METHOD FOR PRODUCING A PART WITH A CAVITY

(30) Priorité: 15.06.2018 FR 1855287
(43) Date de publication de la demande: 21.04.2021
(73) Titulaire: Safran Landing Systems, 78140 Vélizy-Villacoublay (FR)
(72) Inventeur: COURTOIS DE LOURMEL, Yves, 78120 Rambouillet (FR); MESSE, Sébastien, 77550 Moissy-Cramayel (FR); BALDUCCI, Gérard, 77550 Moissy-Cramayel (FR); CAULE, Thierry, 77550 Moissy-Cramayel (FR)
(74) Mandataire: Lavialle, Bruno François Stéphane
(86) Numéro de dépôt international: PCT/EP2019/065751
(87) Numéro de publication internationale: WO 2019/238951

(56) Documents cités:
- EP-A1- 3 026 638
- DE-A1-102010 046 579
- US-A1- 2016 200 051
- US-B2- 9 636 869

## Description

L'invention concerne un procédé de réalisation d'une pièce avec cavité par fabrication additive.

### ARRIERE PLAN DE L'INVENTION

La réalisation de cavités dans une pièce par des procédés de fabrication additive (du type fusion par faisceaux d'électrons, ou fusion sélective par laser) consistant à solidifier progressivement un matériau en poudre par couches s'accumulant selon une direction d'accumulation (ou direction de fabrication) se heurte à des limitations sur les angles de surplomb admissibles. Une cavité de taille importante doit dès lors comporter un plafond voûté pour respecter ces contraintes d'angle de surplomb ce qui augmente le volume (tant interne qu'externe) de la cavité. Cependant, certaines pièces sont contraintes en volume et en encombrement et une telle cavité à plafond voûté n'est pas envisageable. Pour réaliser une cavité à plafond sinon plat, du moins peu voûté, les logiciels de fabrication additive comportent très souvent une fonction permettant de créer lors de la fabrication de la pièce des supports sous forme de colonnettes pour soutenir le plafond de la cavité lors de sa fabrication. Cependant ces colonnettes occupent un volume important, et dans le cas de cavités semi-fermées, ou uniquement ouvertes sur l'extérieur par un canal d'arrivée de fluide, il n'est pas possible de supprimer ces colonnettes.

Le document US2016/200051 décrit une méthode de calcul de structures de support, comprenant des colonnes couronnées de chapiteaux inversés, en fonction de l'angle de surplomb maximum pour un matériau donné.

### OBJET DE L'INVENTION

L'invention vise à proposer un procédé de réalisation d'une pièce avec cavité par fabrication additive, permettant de minimiser le volume occupé par les supports qui soutiennent le plafond et destinés à rester à demeure.

### PRESENTATION DE L'INVENTION

En vue de la réalisation de ce but, on propose un procédé de réalisation d'une pièce avec cavité par fabrication additive comportant les étapes de :
- définir sur le plafond de la cavité des portions contigües, dont au moins une portion centrale entièrement délimitée par des arêtes, et des portions périphériques délimitées par des arêtes et une partie d'une frontière du plafond;
- pour la portion centrale, définir un chapiteau au moyen de facettes s'appuyant sur les arêtes délimitant la portion centrale et convergeant vers un apex, ainsi qu'un support élancé qui s'étend depuis le chapiteau jusqu'à un plancher de la cavité en étant centré sur l'apex;
- pour chaque portion périphérique, définir un chapiteau au moyen de facettes s'appuyant sur les arêtes délimitant ladite portion périphérique et convergeant vers une arête terminale s'étendant dans un plan sensiblement normal à une paroi de la cavité, ainsi qu'un support en forme de nervure s'étendant entre l'arête terminale du chapiteau et la paroi de la cavité selon le plan normal ;
- fabriquer la pièce comportant la cavité en réalisant les supports et les chapiteaux ainsi définis.

Le contour du plafond peut être défini de façon nette par des arêtes délimitant le plafond de la paroi de la cavité. Si cette délimitation n'est pas nette, par exemple à cause de la présence d'un congé de raccordement, on définira le contour en déterminant un périmètre à partir duquel l'angle de surplomb dépasse une limite prédéterminée.

De préférence, Le support élancé présente une section en étoile avec des branches s'étendant selon des plans respectifs passant par des lignes de fuite séparant les facettes du chapiteau.

### DESCRIPTION DES FIGURES

L'invention sera mieux comprise à la lumière de la description qui suit d'un mode particulier de mise en oeuvre de l'invention, en référence aux figures des dessins annexés, parmi lesquelles :
- La figure 1 est une vue schématique en coupe d'une pièce comportant une cavité ;
- La figure 2 est une vue de détail de la délimitation entre la paroi et le plafond de la cavité ;
- La figure 3 est une vue du plafond découpé en portions ;
- La figure 4 est une vue d'un chapiteau et de son support en colonne réalisé à l'aplomb de la portion centrale ;
- La figure 5 est une section du support en colonne illustré à la figure 4
- La figure 6 est une vue d'un chapiteau et de son support en nervure réalisé à l'aplomb d'une portion périphérique ;
- La figure 7 est une vue en coupe d'une pièce conforme au schéma de la figure 1 et réalisée grâce au procédé de l'invention.

### DESCRIPTION DETAILLEE DE L'INVENTION

Dans tout ce qui suit, la direction d'accumulation (ou direction de fabrication, référencée F sur les figures) correspond à la direction d'accumulation des couches successives de matière par la machine de fabrication additive utilisée pour fabriquer la pièce détaillée ici. La direction d'accumulation est le plus souvent la direction verticale.

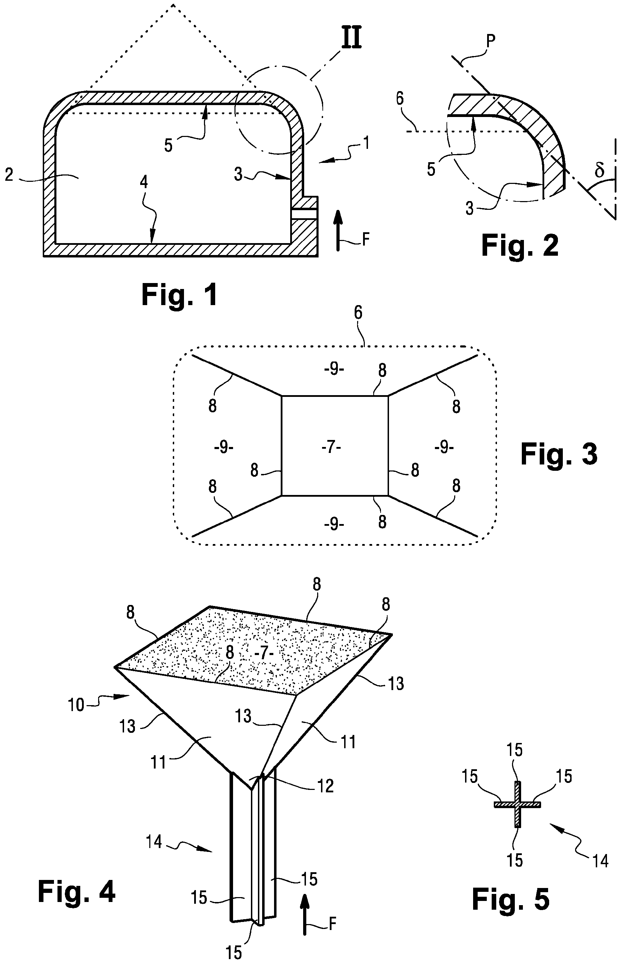

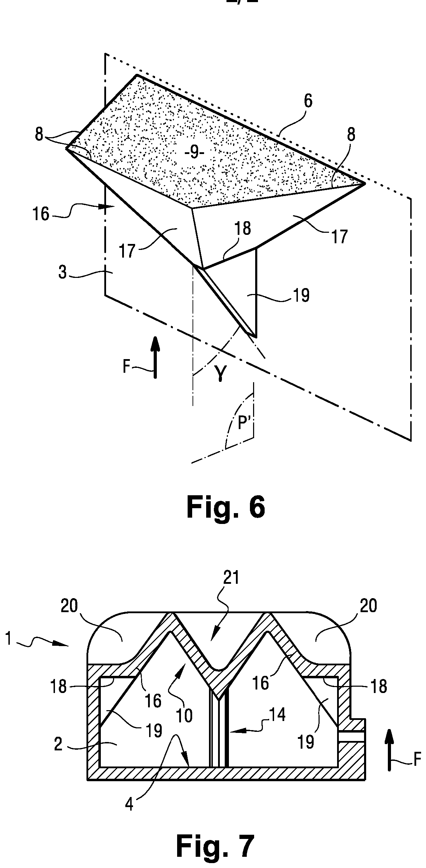

En référence à la figure 1, le procédé a trait à la réalisation par fabrication additive d'une pièce 1 comportant une cavité 2 délimitée par une paroi latérale 3, un plancher 4 et un plafond 5. Ici la cavité 2 est quasiment fermée à l'exception de l'arrivée d'un canal d'apport de fluide de sorte qu'il n'est pas possible d'accéder à la cavité 2 une fois la pièce fabriquée. Le plafond 5 représenté ici ne peut être fabriqué par une machine de fabrication additive acceptant un angle de surplomb δ typiquement de 45 degrés. En effet, la partie centrale du plafond 5 présente un angle de surplomb bien trop important pour que cette pièce puisse être produite par accumulation de couches successives. Le respect de cet angle de surplomb aurait conduit au dessin d'un plafond tel que représenté en pointillés sur la figure 1, ce qui augmente considérablement le volume externe de la pièce. L'invention vise donc à permettre la réalisation de pièces avec des cavités mais à encombrement externe réduit. En vue de la réalisation de ce but, on met en oeuvre les étapes suivantes, en pratique au moyen d'un logiciel de fabrication adapté à lire un fichier de définition de la pièce:
- si besoin, on détermine une frontière du plafond 5 sous la forme d'un contour 6 délimitant celui-ci. Si le plafond 5 est délimité par des arêtes franches, on prendra ces arêtes franches comme contour. Si, comme visible à la figure 2, le plafond 5 et la paroi latérale 3 de la cavité sont reliés par un congé de raccordement, on prendra comme contour 6 le périmètre le long duquel le plan tangent P à la cavité fait avec la direction d'accumulation un angle égal à l'angle de surplomb δ. On voit sur la figure 3 le contour 6 qui a ainsi été déterminé géométriquement. Puis on divise ce plafond 4 ainsi délimité en portions contigües, dont une portion centrale 7 entièrement délimitée par des arêtes 8 et des portions périphériques 9 délimitées par des arêtes 7 et une partie du contour 6 ;
- comme visible à la figure 4, on définit à l'aplomb de la portion centrale 7 un chapiteau 10 par des facettes 11 s'appuyant sur les arêtes 8 qui délimitent la portion centrale 7 pour converger vers un apex 12. Chacune des facettes 11 fait un angle avec la direction d'accumulation au plus égal à l'angle de surplomb. Les facettes 11 sont délimitées entre elles par des lignes de fuite 13. Puis on définit un support 14 en forme de colonne de section constante qui est centrée sur l'apex 12 et qui s'étend selon la direction d'accumulation depuis le chapiteau 10 jusqu'au plancher 3. Comme cela est visible à la figure 5, la section du support 14 est en étoile ayant des branches (ici des branches plates 15) qui s'étendent selon des plans passant chacun par l'une des lignes de fuite 13. Ici en l'occurrence, le chapiteau 10 est en forme de pyramide renversée à quatre facettes 11, et le support 14 a une section en étoile cruciforme ;
- Comme visible à la figure 6, on définit à l'aplomb de chaque portion périphérique 9 un chapiteau 16 par des facettes 17 s'appuyant sur les arêtes 8 qui délimitent ladite portion périphérique pour converger vers une arête terminale 18 qui s'étend ici dans un plan P' normal à la paroi 3 de la cavité 2 et contenant la direction d'accumulation. Chacune des facettes 17 fait un angle avec l'axe vertical au plus égal à l'angle de surplomb δ. Puis on définit un support 19 en forme de nervure de section constante s'étendant entre l'arête terminale 18 du chapiteau 16 et la paroi 3 de la cavité selon le plan normal P'. La pente γ du bord libre de la nervure 19 relativement à la direction d'accumulation est au plus égale à l'angle de surplomb δ.

On fabrique alors la pièce par fabrication additive, en réalisant par accumulation de couches successives les supports 14 et 19, et les chapiteaux 10 et 16 en même temps que la paroi 3. On parvient ainsi à limiter la hauteur du plafond de la cavité, au prix de la présence dans la cavité d'éléments de renfort. La présence de ces éléments de renfort diminue le volume de la cavité, et il y a lieu si nécessaire de modifier la forme de la cavité pour lui redonner le volume désiré malgré la présence de ces éléments de renfort. La finesse des sections des branches de la colonne 14 et de la nervure 19 est bien sûr à déterminer en fonction de capacités de la machine de fabrication. On aura intérêt à fixer au minimum la largeur des branches et des nervures pour économiser de la matière et impacter au minimum le volume de la cavité, tout en permettant la fabrication des chapiteaux par-dessus la colonne et les nervures.

Comme illustré sur la figure 7, on pourra bien entendu évider les chapiteaux 10,16 pour alléger la pièce et économiser la matière. On obtient ainsi des creux 20 périphériques et des creux 21 centraux par-dessus les chapiteaux si la forme externe de la pièce n'est pas essentielle au droit des chapiteaux. Il est toujours possible de combler ces creux par accumulation de matière si la forme externe est essentielle.

L'invention n'est pas limitée à ce qui vient d'être décrit, mais englobe au contraire toute variante entrant dans le cadre défini par les revendications. En particulier, bien que dans l'exemple illustré, le support élancé de la zone centrale soit une colonne à section en étoile à branches plantes, on pourra utiliser tout autre type de support élancé, comme par exemple une colonne cylindrique à section circulaire, une colonne conique ou encore une colonne ajourée, du moment que celle-ci parte de l'apex du chapiteau pour s'étendre jusqu'au plancher de la cavité. Bien qu'on ait illustré ici une seule portion centrale dans la division du plafond, on pourra diviser la zone centrale du plafond en plusieurs portions pour diminuer leur surface et donc la hauteur des chapiteaux associés, ce qui implique la présence de plusieurs supports élancés.

## Revendications

1. Procédé de réalisation d'une pièce avec cavité par fabrication additive comportant les étapes de :
- définir sur un plafond (5) de la cavité des portions contiguës (7;9), dont au moins une portion centrale (7) entièrement délimitée par des arêtes (8), et des portions périphériques (9) délimitées par des arêtes (8) et une partie d'une frontière (6) du plafond;
- pour la portion centrale, définir un chapiteau (10) au moyen de facettes (11) s'appuyant sur les arêtes (8) délimitant la portion central et convergeant vers un apex (12), ainsi qu'un support élancé (14) qui s'étend depuis le chapiteau jusqu'à un plancher (4) de la cavité en étant centré sur l'apex;
- pour chaque portion périphérique (9), définir un chapiteau (16) au moyen de facettes (17) s'appuyant sur les arêtes (8) délimitant la portion périphérique et convergeant vers une arête terminale (18) s'étendant dans un plan (P') normal à une paroi de la cavité, ainsi qu'un support (19) en forme de nervure s'étendant entre l'arête terminale du chapiteau et une paroi de la cavité selon le plan normal ;
- fabriquer la pièce comportant la cavité en réalisant les supports et les chapiteaux ainsi définis.

2. Procédé selon la revendication 1, dans lequel le support élancé (14) présente une section en étoile avec des branches (15) qui s'étendent selon des plans respectifs passant par des lignes de fuite (13) séparant les facettes du chapiteau.

3. Procédé selon la revendication 2, dans lequel les branches (15) du support élancé (14) sont plates.

## Patentansprüche

1. Verfahren zur Herstellung eines Teils mit einem Hohlraum durch additive Fertigung, umfassend die Schritte:
- Definieren von angrenzenden Abschnitten (7; 9) auf einer Decke (5) des Hohlraums, darunter mindestens einen zentralen Abschnitt (7), der vollständig von Kanten (8) begrenzt ist, und periphere Abschnitte (9), die von Kanten (8) und einem Teil einer Begrenzung (6) der Decke begrenzt sind;
- für den zentralen Abschnitt, Definieren eines Kapitells (10) mittels Facetten (11), die sich auf die den zentralen Abschnitt begrenzenden Kanten (8) stützen und zu einer Spitze (12) konvergieren, und eines schlanken Trägers (14), der sich ab dem Kapitell bis zu einem Boden (4) des Hohlraums erstreckt, während er auf die Spitze zentriert ist;
- für jeden peripheren Abschnitt (9), Definieren eines Kapitells (16) mittels Facetten (17), die sich auf die den peripheren Abschnitt begrenzenden Kanten (8) stützen und zu einer Endkante (18) konvergieren, die sich in einer Ebene (P') erstreckt, die senkrecht zu einer Wand des Hohlraums ist, sowie eines Trägers (19) in Form einer Rippe, die sich zwischen der Endkante des Kapitells und einer Wand des Hohlraums gemäß der normalen Ebene erstreckt;
- Herstellen des Teils, das den Hohlraum umfasst, indem die Träger und die Kapitelle, die auf diese Weise definiert sind, realisiert werden.

2. Verfahren nach Anspruch 1, bei dem der schlanke Träger (14) einen sternförmigen Abschnitt mit Schenkeln (15) aufweist, die sich in jeweiligen Ebenen erstrecken, die durch Fluchtlinien (13) verlaufen, die die Facetten des Kapitells voneinander trennen.

3. Verfahren nach Anspruch 2, bei dem die Schenkel (15) des schlanken Trägers (14) flach sind.

## Claims

1. A method of making a part with a cavity by additive manufacturing, the method comprising the steps of:
- defining contiguous portions (7; 9) over a ceiling (5) of the cavity, including at least one central portion (7) defined entirely by edges (8), and peripheral portions (9) defined by edges (8) and by a portion of a frontier (6) of the ceiling;
- for the central portion, defining a capital (10) by means of facets (11) that bear against the edges (8) defining the central portion and that converge towards an apex (12), and also defining a slender support (14) that extends from the capital to a floor (4) of the cavity while being centered on the apex;
- for each peripheral portion (9), defining a capital (16) by means of facets (17) that bear against the edges (8) defining the peripheral portion and that converge towards a terminal edge (18) extending in a plane (P') that is normal to a wall of the cavity, and also defining a support (19) in the form of a rib that extends in the normal plane between the terminal edge of the capital and a wall of the cavity; and
- manufacturing the part including the cavity while making the above-defined supports and capitals.

2. A method according to claim 1, wherein the slender support (14) presents a star-shaped section with branches (15) that extend in respective planes containing receding lines (13) between the facets of the capital.

3. A method according to claim 2, wherein the branches (15) of the slender support (14) are flat.
